# EUROPEAN PATENT SPECIFICATION

(11) **EP 3 903 569 B1**
(45) Date of publication and mention of the grant of the patent: **07.06.2023**
(21) Application number: 21170368.1
(22) Date of filing: 26.04.2021
(51) Int. Cl.: A01G 9/02, A01G 24/15, A01G 33/00, E02B 3/04, E02B 3/12

(54) **DEVICE FOR SUPPORTING, GROWING AND REPLANTING AQUATIC PLANTS FROM SEEDS**
VORRICHTUNG ZUR UNTERSTÜTZUNG, ZUM ANBAU UND ZUR WIEDERBEPFLANZUNG VON WASSERPFLANZEN AUS SAMEN
DISPOSITIF POUR SUPPORTER, FAIRE POUSSER ET REPLANTER DES PLANTES AQUATIQUES À PARTIR DE SEMENCES

(30) Priority: 27.04.2020 IT 202000009046
(43) Date of publication of application: 03.11.2021
(73) Proprietor: Stazione Zoologica "Anton Dohrn", 80121 Napoli (IT); Consiglio Nazionale Delle Ricerche, 00185 Roma (IT)
(72) Inventor: ALAGNA, Adriana, 90149 Loc. Addaura - Palermo (IT); BADALAMENTI, Fabio, 90149 Loc. Addaura - Palermo (IT); MUSCO, Luigi, 73044 Galatone (Lecce) (IT)
(74) Representative: Currado, Luisa

(56) References cited:
- EP-A1- 2 548 435
- CN-A- 105 735 199
- CN-A- 107 313 403
- FR-A5- 2 239 120
- KR-A- 20150 093 346
- KR-B1- 101 429 481
- KR-B1- 101 659 304
- KR-B1- 102 003 705

## Description

### Background of the invention

The present invention relates to the field of techniques for the reforestation of the seabed and for the restoration of aquatic plants, in particular marine phanerogams, starting from their seeds. For this purpose, a specific device is presented which guarantees the support of the seeds and the development and growth of the shoots, up to the moment of replanting the plants obtained, which takes place using the same device.

### Prior Art

The techniques of reforestation of aquatic plants known in the art are based on the use of biological material such as rhizomes or clods taken from donor beds and replanted in selected sites for re-implantation. Anchor devices are required to ensure that the re-implanted plant anchors itself to the natural substrate. The restoration interventions present some logistical and environmental problems since the removal of large quantities of biological material can have negative effects on donor meadoews. In addition, some species of marine phanerogams, including Posidonia oceanica, are protected by national and international agreements, therefore the withdrawal of biological material from the meadows is limited or discouraged.

Seagrass meadows represent one of the most important biomes by virtue of the function they perform in the ecosystem and whose value has been estimated at about 3.8 trillion dollars a year. Marine phanerogams are in fact considered organisms capable of building new habitats and characterized by high complexity. Marine phanerogams systems have high primary productivity and release significant quantities of oxygen into the water. Seagrasses contribute to coastal protection from erosion, thanks to the stabilization of the seabed exerted by the underground organs, rhizomes and roots, and to the damping-off of the wave energy produced by the mass of the leaf fascicles. Finally, seagrasses represent an important reserve of carbon in the oceans since they store large amounts of organic carbon in the rhizomes, roots and sediment associated with them, subtracting it from biological, geological and chemical cycles and avoiding its re-release into the atmosphere. In the lasts decades seagrasses have undergone a progressive regression caused by the alterations of the environmental conditions produced mainly by anthropic activities, natural perturbations and processes linked to global climate change. In response to this phenomenon, strategies for the management and conservation of seagrass meadows as well as specific conventions and regulatory instruments for the protection of individual species and the habitats they form have been developed worldwide (Ramsar Convention Secretariat, 2013, The Ramsar convention Manual: a guide to the Convention on Wetlands, Ramsar, Iran, 1971, 6th ed. Ramsar Convention Secretariat, Gland, Switzerland; Bern Convention, 1979; Barcelona Convention and SPA / BIO protocol, 1982; Directives 1992/43 / ECC, 2000/60 / ECC and 2008/56 / EC of the Council and of the European Parliament). Where there are no conditions for a spontaneous recovery of seagrass through processes of natural re-colonization, the restoration takes place through transplantation interventions aimed at starting or accelerating the recovery process, to re-establish a functional and self-sustaining habitat.

Environmental restoration interventions must therefore be considered with caution within a broader strategy of conservation and management of marine phanerogam habitats on a regional scale and must follow a code of good practices to maximize the probability of success to guarantee an appropriate use of the biological, economic and human resources available.

Marine phanerogams are rhizomatous plants, with a stem, called rhizome, which can have an erect posture (orthotropic) or creeping (plagiotropic), leaves frequently flat, which develop from the apical meristem of the rhizomes and roots that develop ventrally from the rhizome and anchor the plant to the substratum. Some species are able to form a typical terrace structure, called matte consisting of the intertwining of several layers of rhizomes, roots and sediment deposited inside, in which only the most superficial layer consists of vegetatively active portions of the plant. This structure is able to effectively stabilize soft bottom seabeds.

Traditional transplantation methods provide for the removal of rhizomes bearing one or more leaf bundles or entire clods, by explanting the underground organs of the plant and associated sediment from donor seagrasses, and the reimplantation of the same at the sites chosen for transplantation.Various anchoring devices are needed to secure the transplants to the substrate.

The restoration interventions carried out on medium and large scale pose some ethical and ecological problems since the removal of large quantities of biological material could have negative effects on donor seagrass. Methods defined as independent from donor beds are known, which use seeds, shoots and seedlings developed from seed, beach-casted vegetative propagules (rhizomes) or stimulate the natural recruitment of propagules through the positioning of suitable structures on the seabed (Marion, S.R.,& Orth, R.J., 2010, Innovative Techniques for large scale seagrass restoration using Zostera marina (eelgrass) seeds. Restoration Ecology, 18 (4), 514-526; Balestri, E., &0 Lardicci, C., 2012. Nursery-propagated plants from seed: a novel tool to improve the effectiveness and sustainability of seagrass restoration. Journal of Applied Ecology, 49 (6), 1426- 1435). The use of seeds and plants developed from seed does not affect the donor meadows as it uses beach-casted material. The use of sexual propagules also ensures the maintenance of genetic variability, positively correlated with greater resistance and resilience of the seagrasses to environmental alterations and better performance in transplant operations. Therefore, the integration of restoration methodologies based on the use of seeds and seedlings in conservation strategies represents a promising and recommendable alternative from the ecological point of view.

The period between seed germination and seedling recruitment is generally 12 months from germination and represents a critical phase of the life cycle in higher plants and in particular in seagrasses. During the early stages of development, seeds and seedlings do not have a well-developed root system that anchors them firmly to the substrate. This makes the early stages of the life cycle of aquatic plants particularly exposed to the action of waves and currents that can drag the young seedlings far from the settlement site, not allowing them rooting and subsequently recruit.

Meinesz, A., Caye, G., Loques, F., & Molenaar, H., Polymorphism and development of Posidonia oceanica transplanted from different parts of the Mediterranean into the National Park of Port-Cros. Botanica Marina, 36 (3), 209-216 (1993) describe a method of transplanting Posidonia oceanica cuttings and shoots into the sea bottom and in the dead matte, by means of plastic grids or metal stakes, in which after three-year survival of transplants ranged from 20 to 73%.

Molenaar, H., & Meinesz, A., Vegetative reproduction in Posidonia oceanica: survival and development of transplanted cuttings according to different spacings, arrangements and substrates. Botanica Marina, 38 (1-6), 313-322 (1995), describe the transplantation of Posidonia oceanica cuttings on dead matte, sand and the seagrass Cymodocea nodosa in which each cutting is fixed to the substrate by means of a metal stake curved at the end. After three years, the survival of transplants varies between 0% and 84%. The instability of the sediment and the reshaping of the sediment by crustaceans are responsible for the high mortality found on sand.

Balestri E, Piazzi L, Cinelli F (1998), Survival and growth of transplanted and natural seedlings of Posidonia oceanica (L.) Delile in a damaged coastal area. J Exp Mar Bio Ecol 228: 209-225, describe the transplanting of Posidonia oceanica seedlings of two months of age on dead matte and on pebbles in which the shoot is wrapped with gauze and anchored by a nylon thread to a plastic grid with a 1 cm mesh and the grids are anchored to the substrate by steel pegs. After three years the survival of the shoots on dead matte was 70%, while on pebbles no sprouts survived.

Piazzi, L., Balestri, E., Magri, M., & Cinelli, F. (1998), Experimental transplanting of Posidonia oceanica (L.) Delile into a disturbed habitat in the Mediterranean Sea. Botanica marina, 41 (1-6), 593-602, describe the transplanting of Posidonia oceanica cuttings fixed to metal grids by plasticized iron wires. The grids are attached to the dead matte by metal pegs. After three years, survival varied between 59% and 76%.

Bull, J.S., Reed, D. C., & Holbrook, S. J. (2004),An experimental evaluation of different methods of restoring Phyllospadix torreyi (surfgrass). Restoration Ecology, 12 (1), 70-79, describe seedlings of Phyllospadix torreyi developed from seed in the enclosure that are hooked to nylon threads and exploit the peculiar bristle-like structures possessed by the seed of this species. The nylon threads are secured to the bedrock using epoxy putty. Seedling survival was low, with a high mortality rate in situ.

Vangeluwe D. Effects of the transplantation on the biométrie and on the dynamique des nutriments, on the coal and on the chlorophylle of Posidonia oceanica (L.) Delile. M.Sc. Thesis, University of Liège (2007), describe the transplantation of Posidonia oceanica rhizomes spontaneously detached from the meadows and fixed on a sand substrate by bamboo grids. The individual rhizomes are anchored to the grids by means of vegetable fibers. After three years, survival was 16% due to the low persistence of the anchoring structures.

Carannante F. (2011) - Long-term monitoring of large-scale Posidonia oceanica transplants. PhD Thesis, University of Tuscia, Viterbo, 2011, describes the transplantation of Posidonia oceanica cuttings through concrete frames inside which a hexagonal mesh metal mesh is embedded in which the cuttings are inserted. The frames are placed on a sandy substrate. The transplant is carried out on a total area of 10,000 m2, in 13 clearings within a pre-existing meadow. The average cuttings survival on sample modules ranged from 60 to 104%, with a high inter-annual and inter-site variability. In some sites, due to the presence of strong storms the structures were gone destroyed for cover-up.

Dominguez, M., Celdrán, D., Muñoz Vera, A., Infantes, E., Martinez Baños, P., Marin, A., & Terrados, J. (2012), Experimental Evaluation of the Restoration Capacity of a Fish Farm Impacted Area with Posidonia oceanica (L.) Delile seedlings. Restoration Ecology, 20 (2), 180-187, and Terrados, J., Marin, A., & Celdrán, D. (2013), Use Posidonia oceanica seedlings from beach-cast fruits for seagrass planting. Botanica Marina, 56 (2), 185-195, describe the transplanting of 8-12 weeks of Posidonia oceanica seedlings on dead matte and inside mature seagrasses using a plastic pot inside which fiberglass is placed without the aid of anchoring structures. The pot are anchored to the substrate by means of a metal stake. Survival after three years on dead matte was 44%, within the meadow there was no seedling survival.

A. Alagna, T. Vega Fernandez, G. D'Anna, C. Magliola, S. Mazzola, F. Badalamenti, 2015, PLOSone, Assessing Posidonia oceanica seedling substrate Preference: an experimental determination of seedling anchorage success in rocky vs. sandy substrates, 10 (4) 1-15, describe a study in which Posidonia oceanica shoots were grown from the earliest stages of germination on a calcareous rocky substrate consisting of a matrix of pebbles of varying sizes: large pebbles (LCo, average diameter 181.60 ± 0.39 mm, [average ± SD]), medium pebbles (Mco, 145.00 ± 3.10 mm), 5 small pebbles (Sco, 105.00 ± 3.10 mm) and gravel (CGr, 55.30 ± 13.60 mm), mixed in different proportions to obtain three levels of complexity of the rock matrix: 100% [volume] LCo = low complexity, 76% LCo and 24% CGr = medium complexity, 31% LCo, 22% Mco, 25% SCo and 22% CGr = maximum complexity.After 5 months of culture in the enclosure, in conditions of moderate hydrodynamics, the percentages of adhesion of the shoots on the rock matrix were between a minimum of 84 ± 5% (mean ± SE) on low complexity substrates and a maximum of 89 ± 4% on high substrate complexity.

The French patent no. FR2695536 describes a method of transplanting Posidonia oceanica rhizomes using hooked pegs fixed into the sediment. The method refers to the transplantation of cuttings and not of seeds or seedlings obtained from seeds.

The French patent no. FR2239120 describes a transplanting method that uses a concrete ring attached to the substrate in which three or more housings for marine plant cuttings are made. The method refers to the transplantation of cuttings and / or rhizomes explanted from donor seagrasses used as a transplant unit and not for seeds or seedlings obtained from seeds.

The international patent application n. WO2007054991 describes a method of transplanting plant organisms to be anchored to sea beds which involves the use of a concrete frame in which shoots are fixed to one or two metal nets and one or more biodegradable substrates. The frame can be fixed into the sediment with hooks. The rhizomes of marine phanerogams or other aquatic plants are explanted from mature seagrass and subsequently inserted between the meshes of the net, with the basal part embedded in the sediment. The method refers to the transplantation of cuttings and not of seeds or seedlings obtained from seeds.

The Italian patent application n. PA20100000023 describes a low environmental impact system for fast fixing of marine plant organisms on the seabed. In the description of the invention, reference is made to cuttings (rhizomes) of Posidonia oceanica. The structure consists of a picket in ferrous material and a series of arms in biodegradable material to which the cuttings are fixed. The method refers to the transplantation of cuttings and not of seeds or seedlings obtained from seeds.

The Italian utility model application for the no. ITUB20156832 and the Italian patent n. IT1400800 describe a system similar to that described in PA20100000023 in which modifications are introduced to overcome critical issues relating to the installation of the device. The method refers to the transplantation of cuttings and not of seeds or seedlings obtained from seeds.

The European patents n. EP2859789 and EP2548435 describe a support structure for the replanting of rhizomatous aquatic plants consisting of a metal cage inside which a mass of blocks of inert material, such as rocks, is positioned. The spaces between the blocks constitute housings in which to place the rhizomes of aquatic plants. The method allows to reconstruct a consolidated substrate on which to carry out the transplant. The method refers to the transplantation of cuttings and / or rhizomes explanted from donor meadows used as transplant units and not to seeds or seedlings obtained from seeds.

The Korean patent No. KR101253516 describes a Phyllospadix japonicus Seed Growing Frame to be placed on the seabed.

The Korean patent application no. KR20120065092 exploits the peculiar morphology of the seed of Phyllospadix japonicus, which has invaginations with bristles to secure the seeds to the support. The invention proposed in this patent application exploits the adhesive capabilities of the root system of the shoots of some marine phanerogams. The particular morphology of the support proposed in the present patent application provides the seedling with a protection from hydrodynamic forces and with its weight it opposes the dragging action of the wave motion. Its modularity makes the support suitable for positioning in rocky environments, which naturally constitute the habitat colonized by this species.

The Korean patent application No. KR20070044749 and the Korean patent n. KR100732638 describe support structures embedded in the substrate and provided with appendages. They exploit the peculiar morphology of the seed of this seagrass, which presents some invaginations provided with bristles to secure the seeds to the support.

The Korean patent no.KR101659304 describes a system designed to create a habitat suitable for the life of fish, the so-called submerged reefs, and secondarily to the colonization of various marine organisms including sea cucumbers, octopuses and algae.

Also the Korean patent No. KR102003705, the Korean application n. KR20150093346 and the Chinese patent n. CN105735199 describe support structures for the growth of algae.

Korean patent KR101429481 discloses a support structure for terrestrial plants.

### Technical problem

The need to develop more sustainable methods from an ecological point of view, which support degraded marine phanerogams populations without damaging the donor populations, is strongly felt in the reference sector.

The inventors of the present invention therefore focused on the use of seedlings developed from seed for reforestation interventions, because these techniques do not produce impacts on the donor beds using beach-casted fruits and seeds as starting material, a choice that also guarantees the maintenance of genetic variability in the prairies affected by restoration interventions.

The drawbacks related to the use of seeds mainly concern the period between the germination of the seed and the recruitment of seedlings in situ which represents the critical phase of the life cycle of marine phanerogams.In fact, during the first months of life the young seedlings do not yet have a well-developed root system and therefore can easily be uprooted and dragged away by waves and currents. This does not allow settling and consequently the survival of the new individuals.

Therefore it is necessary to increase the probability of anchoring and the anchoring strength of seedlings to the substrate during the first months of life, to increase the probability of persistence in situ, of survival, and finally the recruitment of new individuals to adulthood.

In light of the drawbacks described above and on the basis of what is known in the state of the art, the inventors of the present invention have developed a device and a method thereof that allows to improve the anchoring rate and the anchoring force of seedlings obtained from seed on the device, for the subsequent transfer at sea to the sites chosen for restocking interventions.

The developed device uses natural materials compatible with the environmental characteristics of the transplant sites and can be positioned in sites where mechanical impacts have led to the removal of portions of prairie together with the original substrate and where it is necessary to reconstitute and / or stabilize the substrate in the area receiving the transplantation or in sites characterized by buried dead matte. Furthermore, the use of the proposed device allows to minimize the working time in immersion and reduce operating costs.

The techniques known in the art use cuttings, and anchor structures in concrete and / or with metal and plastic parts, which are therefore allochthonous and largely non-biodegradable materials, which also do not always guarantee the on-site retention of transplants in the presence of waves and currents, thus being able to cause damage to the replantings themselves and to the adjacent seagrass, as well as causing the dispersion of allochthonous material in the marine environment.

The solution proposed by the present invention is characterized, in addition to using seeds, in using supports of natural material, compatible with that present in the transplant site and taking advantage of the adhesive properties of the root system of the seedlings, obtained from the seeds. The support constitutes a natural ballast for the young seedling, and allows to keep the propagule in place once transferred to the transplant site even in the presence of high intensity of wave motion and currents.

Furthermore, the solution proposed by the present invention can have a modular nature, and can adapt to irregular and rocky substrates, in which the aesthetic impact is minimal, as the natural bedrock is rapidly colonized by marine organisms and is no longer distinguishable.

Finally, it is suitable for use in cases where it is necessary to reconstruct the plant settlement substrate as a result of mechanical impacts that may have caused the removal of the meadow and the original substrate of the plant, such as dredging, and / or the burying of the meadow.

Since the size of the seed and/or seedling are different than that of a rhizome, the inventors of the present invention have selected for this purpose the configuration of the proposed support device and the dimensions of the cavities obtained inside it, which therefore differ from those of devices designed to be used for the transplantation of rhizomes. The configurations and dimensions of the cavities made in the proposed device make it possible to exploit the peculiar adhesive abilities possessed by the root system of some species of marine phanerogams and aquatic plants in the juvenile stages of the life cycle, and therefore differ from the systems already proposed in the state of art.

Therefore, the purposive selection of the geometry and of the design and of the specific dimensions of the cavities of the device, allow to optimize the adhesion rate of the roots of the seedling to the support. In particular, the support has a main cavity which with its different geometries guarantees correct housing of the seed and protection from hydrodynamics in the early stages of germination and root development. In addition, the correct inclination of the substrates allows the roots to grow following the predominant gravitropic stimulus downwards and to develop in close contact with the surface of the support, thus allowing the process of bioadhesion to the substrate through the root hairs, resulting in an anchorage of the seedling to the support that is fast, strong and stable.

### Object of the invention

The technical problem is therefore solved by providing a modular device for the support, growth and replanting of rhizomatous aquatic plants from seeds as set out in the appended claims.

Further characteristics will be clear from the following detailed description with reference to the experimental data provided and the attached figures.

### Brief description of the figures

Figure 1 shows two embodiments of the polyhedral-shaped device: the single module with housing (cavity) for a single seed-sprout and the multi-modular form with a sequence of modules in a single blocks of rock, each of which can house a seed.
Figure 2 shows two further embodiments of the device: the single module with the housing (slit) for a single sprout-seed in frontal and sectional view, wherein the seed is inserted in the narrowest point of the slit with the major axis parallel to the axis of the slit and the multi-modular form with a sequence of modules in a single block of rock, wherein multiple seeds/shoots can be housed.
Figure 3 shows the angle α, defined as the angle between the parallel to portion of substrate of the support where the seedling lays and the surface of the support on wherein the roots grow.

### Detailed description of the invention

The object of the present invention is a modular device for the support, growth and replanting of rhizomatous aquatic plants from seeds characterized by a single polyhedral-shaped module 1 with a width of at least 7 cm, a length of at least 7 cm, a height of at least 8 cm, and comprising at least one tank 2 consisting of a cavity 3 housed in the tank 2 characterized by a depth between 2 and 5 cm, diameter between 1.5 and 5 cm, and having at least one through hole passing on each side of the module 4 with a diameter between 3 and 5 mm, or alternatively said device is characterized by a width of at least 4 cm, a length of at least 10 cm, a height of at least 8 cm and comprising at least one slit 5 arranged parallel to the longest side of the device 1, characterized by depth a defined as the distance from the upper vertex of the device 1 to the lower vertex of the slit 5 between 6 and 3 cm and by a width b defined in the widest point of the same slit 5 of at least 1.5 cm, wherein the at least one through hole 4 or the at least one slit 5 is arranged according to an inclination to form an angle α greater or equal to 45° and less or equal to 135°, wherein α is the angle between the parallel to the support substrate of the device and the surface of the device where the roots grow wherein the device is made of a poorly erodible material, compatible from a mineralogical point of view with the implantation site selected from the group consisting of limestone, limestone or sandstone volcanic rocks.

The minimum measures width of at least 7 cm, length of at least 7 cm, height of at least 8 cm, of the device and the minimum measures width of at least 4 cm, length of 10 cm, height of at least 8 cm are functional to the presence of the tank 2 and the slit 5 respectively and are the minimum measures necessary for their realization.

The maximum measures of the device will be dictated from time to time by the logistical needs of the culturing system and of the transport to the restoration site and are therefore not related to functionality of the invention.

For the slit 5, the width b of at least 1,5 cm ensures that a seed having a diameter of around 1 cm as these of Posidonia Oceanica is housed therein, while other species have generally have seed with lower diameter.

The devices can be in the form of a single module, each of them can accommodate one or more housings (tanks) for the seed(s) depending on the size of the module and the number of thanks that can be derived accordingly.

A plurality of devices can be assembled together in a multi-modular solution wherein multiple devices are assembled in situ at the time f transplantation.

To facilitate transportation, it is possible, at a later time, to combine multiple modules (devices) characterized by one or more housings (thanks) each, using adhesives suitable for the aquatic environment and in particular for the marine environment.

Erodible material such as volcanic tuff is not suitable for the construction of the devices.

The rhizomatous aquatic plants whose seeds can be housed in the device of the present invention for their support, growth and replanting are aquatic plants living in marine, freshwater or transitional waters that are characterized by adhesive properties of the root system of the seedlings and/or the hypocotyl of the seed.

Within the meaning of the present invention adhesive capacity means the ability of the root system to anchor itself to the substrate through bio-adhesion processes. Wherein within the meaning of the present invention, the most frequent bioadhesion mechanisms in plants are: chemical adhesion produced by extracellular secretion of adhesive substances by the contact elements between the plant and the substrate (root cells, root hairs) and the so-called mechanical interlocking, i.e. the growth of the contact elements between the plant and the substrate (root cells, root hairs) within the irregularities of the substrate, replicating the topography of the surface and the subsequent stiffening of the contact elements through the deposition of lignin and / or cellulosic compounds. In particular, the proposed technical solution is applicable to marine phanerogams such as Posidonia oceanica, Thalassia testudinum, Thalassia hemprichii, Phyllospadix spp., Enhalus acoroides and Halophila tricostata for which it is known the adhesive properties of the root system of the shoots and/or of the hypocotyl of the seed have been described.

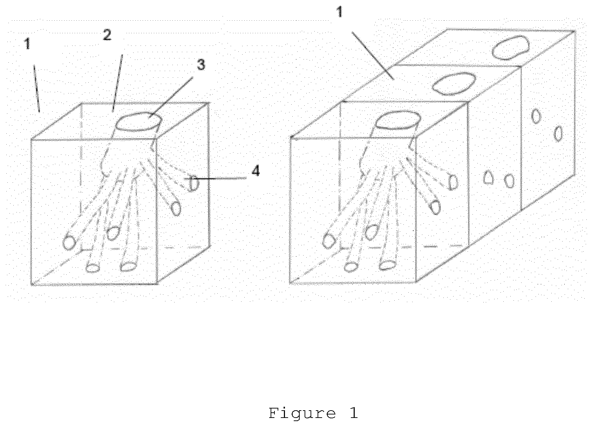

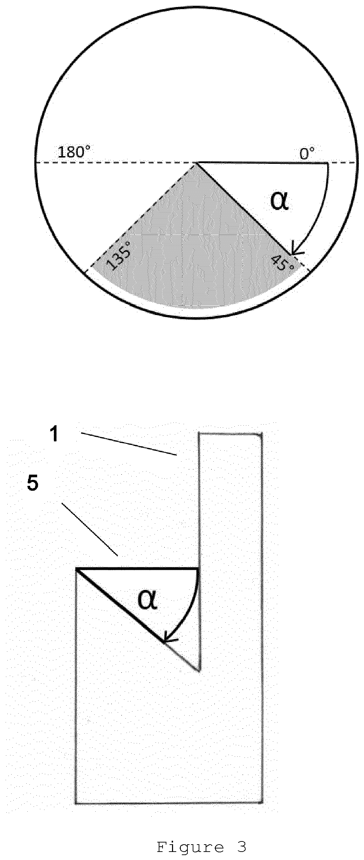

In a preferred embodiment, as shown in figure 1, the dimensions of the device are wide 7 cm, length 7 cm, height 8 cm, the tank has a cavity of depth 2 cm and diameter 1.6 cm for housing the seed and at least two holes of diameter of about 4 mm in on each side of the parallelepiped, excluding the upper side wherein the central cavity is made. The holes intercept the central cavity and develop vertically or diagonally, with substrate inclination characterized by an angle α greater or equal to 45° and less or equal to 135°, wherein α represents the angle between the parallel to the support substrate and the surface on which the roots grow, as shown in figure 3. The cavity allows the growth of the roots and the eventual leakage of the same outside the support. The correct inclination of the substrate allows the roots to grow following the predominant gravitropic stimulus downwards and to develop in close contact with the surface of the support, thus allowing the adhesion of root hairs to the substrate. The width and length of the device can be greater, and in said case it is possible to make more housings (tanks) in the same device, as shown in the Figure 1.

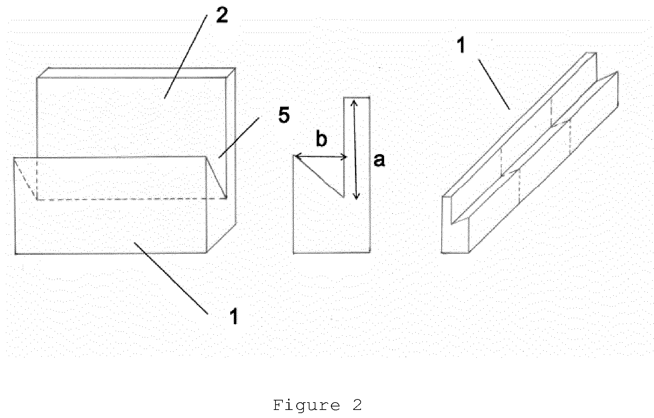

In a further embodiment of the invention, the device has width 4 cm, length 10 cm, height 8 cm, as shown in Figure 2. The tank consists of a slit developing parallel to the longer side, with depth 5.8 cm and width 2.7 cm. The inclination is characterized by an angle α greater than or equal to 45° and less than or equal to 135°, wherein α represents the angle between the parallel to the support substrate of the support and the surface of the support wherein the roots accrete, as shown in figure 3. It is possible to prepare wider devices and make more slits (tanks) in the same device or make a longer tank in which to house more seedlings, as shown in figure 2.

It is further described a method for harvesting, cultivating, maximizing seedling anchoring to the support, and subsequent transplantation to the field including the following stages:
a) identification of the lithologies present at transplantation site and search for stone material available on the market with the most similar characteristics in terms of mineralogical composition, erodibility, color;
b) production of the device;
   For example, the processing of the chosen stone material takes place through the use of a circular saw for the reduction into blocks of defined dimensions and for the creation of the slit if the variant 2 of the support is used. Processing through the use of a drill with 10 mm diameter for the realization of the central cavity at the centimetre scale and 3 mm diameter for the realization of the cavities at the millimetre scale in case of use of variant 1 of the support.
c) collection of fruits and seeds released from the prairies in the reproductive period, in coastal areas colonized by seagrass meadows in good health, in areas of accumulation of marine plant debris within a few hours from stranding to prevent them from deteriorating or being contaminated by pathogens.
   For example, along the coasts of the southwestern Mediterranean Sea, the beaching of Posidonia oceanica seeds and fruits occurs annually between April and June, in varying quantities from one year to the next. On average, having a knowledge of seed release periods and stranding areas it is possible to collect from tens to hundreds of seeds in one day. In some cases, massive stranding events allow thousands of seeds to be collected in a few hours. The stranding occurs in a timely manner over time, can persist for 1-2 days and can recur more times during the same reproductive season.
d) rearing in culture systems. After harvesting, the seed is extracted from the fruit, rinsed with sterilized sea water and placed in the culturing system under controlled conditions for the following weeks.
   Preferably, the culture conditions in the enclosure are: temperature 21 °C, salinity 38 ppt, irradiance 40 ± 5 µmol photons m-2 s-1, photoperiod 12:12 hours light: dark. The percentage of germination and survival of the seedlings in the culture system recorded in the first 3-4 months of life in several experiences is about 80%.
e) housing of the seed/seedling in the device; the seed/seedling is placed in the reservoir of the device, or in the narrowest point of the slit with the major axis parallel to the development of the slit in the case of the second variant of the device. The housing of the seedling in the device must take place within the first four weeks from the start of germination, before the root system has reached excessive development (primary root length less than 10 mm and secondary root length less than 5 mm) . This timing allows the growing root system to conform to the structure of the device, obtaining a very stable anchorage through the adhesive root hairs produced by the hypocotyl and roots. In addition, the growth of the roots within the holes determines an increase in the anchoring force due to the mechanical friction exerted by the roots on the support itself. After planting the seed on the support, it is necessary to leave the seedling-support unit in the culture system for at least 4-6 weeks, ensuring minimum mechanical disturbance. This phase of prolonged and undisturbed contact between the roots and the device ensures that the adhesion process through the root hairs is successful and that the root system grows by replicating the morphology of the support, maximizing the contact surface between roots and the substrate and therefore the overall anchoring force.
f) transfer of the plantlet-device unit to the transplantation site. Nothing will be needed at this stage to secure the seedling to the stone device, as this will be spontaneously and firmly anchored to its support. The seedling and the stone device will constitute the transplant unit. The transfer in situ must be done by ensuring that the transplant unit remains submerged and minimizing any emergence time (minutes). The stone device represents a natural ballast and gives the transplant unit a greater weight the larger the support is. Weight of the seedling-device unit will exert resistance to the hydrodynamics produced by currents and wave motion and will give stability to the transplant unit. Increasing the weight of the transplant unit will increase the likelihood that the structure will remain in place in the presence of water movement, therefore the supports must be sized according to the hydrodynamics, the type of substrate present and the method of installation on site. The transplant units are suitable to be inserted inside larger structures, such as stone mattresses already developed in previous patents. In this case the transplant units will be blocked and contained by the outer cage of the mattress. The unit must be correctly sized so that it cannot escape from the mesh of the cage or it must be blocked between the other rocks that make up the filling material of the cage itself.

The method described is applicable at transplantation sites where mechanical impacts have determined the damage or removal of seagrass beds together with the original substrate and it is necessary to reconstitute and / or stabilize the plant substrate. In this case, the seedling-device unit can be positioned within a reconstructed consolidated substrate, such as stone mattresses or within a free stone beds. If the chosen site is characterized by the presence of dead matte it is possible to house the seedling-device units inside the matte structure.

The field of applicability of the invention concerns the restoration of all seagrass and aquatic plants that are able to produce seeds with adhesive properties of the root system during the initial stages of the life cycle. Among the marine phanerogams these characters have been reported for some species belonging to the genera Phyllospadix, Thalassia, Enhalus and Halophila, as well as for the Posidonia oceanica species.

### Examples

The device of the present invention and the related method for its use have been tested on the species Posidonia oceanica (L.) Delile, endemic and dominant marine phanerogam of the Mediterranean Sea, included among the protected species of Annex I of the Bern Convention (1979), whose meadows represent a habitat of priority interest for conservation according to the Directive Habitat of the European Commission (92/43 / EEC) and the SPA / BD Protocol of the Barcelona Convention (1976). Posidonia oceanica is used here as a model for other species that produce seeds with adhesive properties of the root system during the initial stages of the life cycle, such as those relating to genera Thalassia, Enhalus, Phyllospadix and Halophila.

Posidonia oceanica reproduces sexually through fruits released between the end of spring and the beginning of summer. The fruits detach from the mother plant and float for a few days pushed by the currents. When ripe, the fruit opens and drops a seed, devoid of dormancy, with photosynthetic capacity, from which the leaf and root primordia have already begun to develop.

The seeds of Posidonia oceanica during the first stages of germination produce unicellular structures (hairs) at the base of the hypocotyl of the seed and on the primary and secondary roots with adhesive capacity and with an anchoring function. Some experiments have shown that anchoring through adhesive root hairs is effective only when adhesion occurs on consolidated substrates (rock), since in the presence of hydrodynamic disturbance these substrates have the necessary inertia to remain in place. On the contrary, root hairs adhere to sediment particles on mobile substrates (sand, gravel), and although this determines an increase in the weight of the seedling and the inertia that this opposes to the movement of the water masses, this is not sufficient to retain the propagule in place, if not in particularly benign conditions (very low hydrodynamic intensity). The maximum adhesion strength of Posidonia oceanica shoots recorded on rocky substrate was 23.8N, equivalent to a weight force of 2.43 kg, largely sufficient to guarantee the persistence of young seedlings during winter storms. The presence of cavities in the substrate at relevant scales for the seed and for the seedling (1-3 cm) positively influences the retention capacity of the propagules in the presence of hydrodynamics. Also the topographical complexity at a scale compatible with that of the diameter of the roots (millimeters) coupled with a suitable design that allows the development of the root system in close contact with the substrate, according to the tropisms of the root, allows to obtain a stable adhesion of the root system to the desired support in a few weeks.

The survival and adhesion of the shoots in the culture system was evaluated after six months of cultivation on the stone supports object of the present invention (seedling age about 6 and a half months):
Survival rate of shoots adhered to a support of type 1): 87.5± 12.50% (mean ± standard error), average percentage of survival measured on 2 culture tanks.

Survival rate of shoots adhered to type 2 support): 100%

There are no statistically significant differences in survival between the two types of support.

Percentage of adhesion to supports through adhesive radical hairs support type 1): 100%

Percentage of adhesion to substrates through root hairs support type 2): 100%

Preliminary data on the survival of the shoots in situ were obtained 4 months after transplanting into the sea (seedling age 10 and a half months):
Survival rate: 83.33±5.97% (mean ± standard error), there are no statistically significant differences in survival between the two types of support. Number of replicates = 6, each corresponding to an experimental transplant unit (the experimental transplant unit consists of a caged stone mattress in which there are several seedlings, each anchored to a support).

For comparison, the adhesion capability of Posidonia oceanica seedlings of some week of age grown on consolidated substrates (rock), therefore of a different shape with respect to the device of the present application. In an experiment, the Posidonia oceanica seedlings were reared in tanks on supports made of limestone tiles with different configurations. The tiles used were 10 × 10cm flat (low complexity), 10 × 10 cm tiles with 5 parallel grooves 0.4 cm wide and 0.4 cm deep (medium complexity), 10 × 10 cm tiles with a central groove 2 cm wide and 1 cm deep and 4 grooves parallel to each other and to the central groove 0.4 cm wide and 0.4 cm deep (high complexity). After four months of culturing, in weak hydrodynamic conditions, the percentages of adhesion of the seedlings to the stone supports were 55 ± 3% (mean ± SE) on highly complexity supports, 29 ± 1% on medium complexity supports and 0 % on low complexity supports.

Furthermore, two-week-old Posidonia oceanica seedlings were grown on supports made of calcarenitic stone with different configurations. The configuration called "cube" was used, consisting of a parallelepiped with a minimum size of 7x7x8 cm, in which is created a cavity with a depth of 2 cm and a diameter of 1.6 cm for housing the seed and two holes of about 4 mm diameter on each side of the parallelepiped for root growth. The second configuration, called "slit" was made up of a 4x10x8 cm parallelepiped, inside which a slit is made with depth of 5.8 cm and maximum width of 2.7 cm.

The inclination of the holes in the first configuration and of the walls of the slit in the second configuration are characterized by an angle α greater than or equal to 45° and less than or equal to 135 °, where α is the angle between the parallel to the substrate supporting the device and the surface of the device on which the roots grow. A third configuration, called "star", consisted of a 10x8x4 cm parallelepiped with a central hole passing from side to side, 1 cm in diameter and 8 grooves 0.5 cm wide and 0.5 cm deep made on the upper surface of the parallelepiped. Finally, the fourth configuration, called "tile", was made up of a parallelepiped 8×8×1cm with a flat surface. After six months of culturing in weak hydrodynamic conditions, no seedlings adhered to the "tile" type of support. On the "cube" and "slit" type supports, adhesion occurred in 100% of cases, affecting both the root system of the seedling, through adhesive root hairs, and the lower part of the seed, through adhesive root hairs. The roots developed mostly within the supports themselves. On the "star" type support, adhesion occurred in 100% of cases, but only through the lower part of the seed, while the roots developed downwards, always outside the support, coming out from the central hole and facing breakage during the transfer of the seedlings from the culture system to the transplantation site.

## Claims

1. Modular device (1) for the support, growth and replanting of rhizomatous aquatic plants from seeds, comprising a single module (1) of polyhedral form **characterized by** a width of at least 7 cm, a length of at least 7 cm, a height of at least 8 cm and comprising at least one tank (2) consisting of a cavity (3) housed in the tank (2), with a depth of between 2 and 5 cm and a diameter between 1.5 and 5 cm, and having at least one through hole (4) with a diameter between 3 and 5 mm, wherein the at least one through hole (4) is arranged according to an inclination such as to form an angle (α) greater than or equal to 45 degrees and less than or equal to 135 degrees, where the angle (α) is the angle between a parallel to a substrate supporting the device and the surface of the device on which the roots grow, wherein the device (1) consists of a poorly erodible material, compatible from a mineralogical point of view with the transplantation site, chosen in the group consisting of limestone, calcarenetic limestone, compact sandstone or volcanic rocks.

2. Modular device for the support, growth and replanting of rhizomatous aquatic plants from seeds, comprising a single module (1) of polyhedral form **characterized by** a width of at least 4 cm, a length of at least 10 cm, a height of at least 8 cm, and comprising at least one slit (5) arranged parallel to the longest side of the device (1), with a depth (a) defined as the distance from the top of the device (1) to the lower vertex of the slit (5) between 6 and 3 cm and a width (b) defined in the widest point of the slit (5) of at least 1.5 cm, wherein the at least one slit (5) is arranged according to an inclination such as to form an angle (α) greater than or equal to 45 degrees and less than or equal to 135 degrees, where the angle (α) is the angle between a parallel to a substrate supporting the device and the surface of the device on which the roots grow, wherein the device (1) consists of a poorly erodible material, compatible from a mineralogical point of view with the transplantation site, chosen in the group consisting of limestone, calcarenetic limestone, compact sandstone or volcanic rocks.

3. Modular device (1) according to claim 1, wherein in the cavity (3) there are at least one through hole (4) per side with the exception of the upper side.

4. Modular device according to claims 1 or 2, comprising multiple modules (1) in a multi-modular form.

5. Modular device according to claim 4 wherein in the multi-modular form several modules (1) are joined by adhesives suitable for the aquatic environment.

6. Modular device (1) according to claim 1, wherein the cavity (3) has a depth of 2 cm, a diameter 1.6 cm, and two through holes (4) per side with a diameter of 4 mm with the inclination (α) between 45 and 135 degrees.

7. Modular device (1) according to claim 2, wherein the slit (5) has a depth (a) of 5.8 cm and a width (b) of 2.7 cm and an inclination (α) between 45 and 135 degrees.

## Patentansprüche

1. Modulare Vorrichtung (1) für die Unterstützung, das Wachstum und die Umpflanzung von rhizomartigen Wasserpflanzen aus Samen, umfassend ein einzelnes Modul (1) in polyedrischer Form, **gekennzeichnet durch** eine Breite von mindestens 7 cm, eine Länge von mindestens 7 cm, eine Höhe von mindestens 8 cm und umfassend mindestens eine Tank (2), der aus einem in dem Tank (2) angeordnetem Hohlraum (3) mit einer Tiefe zwischen 2 und 5 cm und einem Durchmesser zwischen 1,5 und 5 cm besteht und mindestens ein Durchgangsloch (4) mit einem Durchmesser zwischen 3 und 5 mm umfasst, wobei das mindestens eine Durchgangsloch (4) entsprechend einer Neigung angeordnet ist, um einen Winkel (α) größer oder gleich 45 Grad und kleiner oder gleich 135 Grad zu bilden, wobei der Winkel (α) der Winkel zwischen einer Parallelen zu einem die Vorrichtung tragenden Substrat und der Oberfläche der Vorrichtung ist, auf der die Wurzeln wachsen, wobei die Vorrichtung (1) aus einem schwer erodierbaren Material besteht, das aus mineralogischer Sicht mit dem Verpflanzungsort kompatibel ist, ausgewählt aus der Gruppe bestehend aus Kalkstein, kalkhaltigem Kalkstein, kompaktem Sandstein oder vulkanischem Gestein.

2. Modulare Vorrichtung für die Unterstützung, das Wachstum und die Umpflanzung von rhizomartigen Wasserpflanzen aus Samen, umfassend ein einzelnes Modul (1) in polyedrischer Form, **gekennzeichnet durch** eine Breite von mindestens 4 cm, eine Länge von mindestens 10 cm, eine Höhe von mindestens 8 cm und umfassend mindestens einen Schlitz (5), der parallel zur längsten Seite der Vorrichtung (1) angeordnet ist, mit einer Tiefe (a) zwischen 6 und 3 cm, definiert als der Abstand von der Oberseite der Vorrichtung (1) zum unteren Scheitel des Schlitzes (5) und einer Breite (b) von mindestens 1,5 cm, definiert an der breitesten Stelle des Schlitzes (5), wobei der mindestens eine Schlitz (5) entsprechend einer Neigung angeordnet ist, um einen Winkel (α) größer als oder gleich 45 Grad und kleiner als oder gleich 135 Grad zu bilden, wobei der Winkel (α) der Winkel zwischen einer Parallelen zu einem die Vorrichtung tragenden Substrat und der Oberfläche der Vorrichtung ist, auf der die Wurzeln wachsen, wobei die Vorrichtung (1) aus einem schwer erodierbaren Material besteht, das aus mineralogischer Sicht mit dem Verpflanzungsort kompatibel ist, ausgewählt aus der Gruppe bestehend aus Kalkstein, kalkhaltigem Kalkstein, kompaktem Sandstein oder vulkanischem Gestein.

3. Modulare Vorrichtung (1) nach Anspruch 1, wobei in dem Hohlraum (3) mindestens eine Durchgangsbohrung (4) pro Seite mit Ausnahme der Oberseite vorhanden ist.

4. Modulare Vorrichtung nach Anspruch 1 oder 2, umfassend mehrere Module (1) in einer multimodularen Form.

5. Modulare Vorrichtung nach Anspruch 4, wobei in der multimodularen Form mehrere Module (1) durch Klebstoffe verbunden sind, welche für wässrige Umgebung geeignet sind.

6. Modulares Gerät (1) nach Anspruch 1, wobei der Hohlraum (3) eine Tiefe von 2 cm, einen Durchmesser von 1,6 cm und zwei Durchgangslöcher (4) pro Seite mit einem Durchmesser von 4 mm mit der Neigung (α) zwischen 45 und 135 Grad aufweist.

7. Modulare Vorrichtung (1) nach Anspruch 2, wobei der Schlitz (5) eine Tiefe (a) von 5,8 cm und eine Breite (b) von 2,7 cm und eine Neigung (α) zwischen 45 und 135 Grad aufweist.

## Revendications

1. Dispositif modulaire (1) pour supporter, faire pousser et replanter des plantes aquatiques rhizomateuses à partir de semences, comprenant un unique module (1) de forme polyédrique **caractérisé par** une largeur d'au moins 7 cm, une longueur d'au moins 7 cm, une hauteur d'au moins 8 cm et comprenant au moins un réservoir (2) constitué d'une cavité (3) logée dans le réservoir (2), avec une profondeur comprise entre 2 et 5 cm et un diamètre compris entre 1,5 et 5 cm, et ayant au moins un trou traversant (4) avec un diamètre compris entre 3 et 5 mm, dans lequel l'au moins un trou traversant (4) est agencé selon une inclinaison de manière à former un angle (α) supérieur ou égal à 45 degrés et inférieur ou égal à 135 degrés, où l'angle (α) est l'angle entre une parallèle à un substrat supportant le dispositif et la surface du dispositif sur laquelle les racines poussent, dans lequel le dispositif (1) est constitué d'un matériau faiblement érodable, compatible d'un point de vue minéralogique avec le site de transplantation, choisi dans le groupe constitué de calcaire, de calcarénite, de grès compact ou de roches volcaniques.

2. Dispositif modulaire pour supporter, faire pousser et replanter des plantes aquatiques rhizomateuses à partir de semences, comprenant un unique module (1) de forme polyédrique **caractérisé par** une largeur d'au moins 4 cm, une longueur d'au moins 10 cm, une hauteur d'au moins 8 cm, et comprenant au moins une fente (5) agencée parallèle au plus long côté du dispositif (1), avec une profondeur (a) définie comme la distance du dessus du dispositif (1) au sommet inférieur de la fente (5) entre 6 et 3 cm et une largeur (b) définie dans le point le plus large de la fente (5) d'au moins 1,5 cm, dans lequel l'au moins une fente (5) est agencée selon une inclinaison de manière à former un angle (α) supérieur ou égal à 45 degrés et inférieur ou égal à 135 degrés, où l'angle (α) est l'angle entre une parallèle à un substrat supportant le dispositif et la surface du dispositif sur laquelle les racines poussent, dans lequel le dispositif (1) est constitué d'un matériau faiblement érodable, compatible d'un point de vue minéralogique avec le site de transplantation, choisi dans le groupe composé de calcaire, de calcarénite, de grès compact ou de roches volcaniques.

3. Dispositif modulaire (1) selon la revendication 1, dans lequel dans la cavité (3) se trouve au moins un trou traversant (4) par côté à l'exception du côté supérieur.

4. Dispositif modulaire selon les revendications 1 ou 2, comprenant de multiples modules (1) sous une forme multimodulaire.

5. Dispositif modulaire selon la revendication 4 dans lequel dans la forme multimodulaire plusieurs modules (1) sont reliés par des adhésifs adaptés à l'environnement aquatique.

6. Dispositif modulaire (1) selon la revendication 1, dans lequel la cavité (3) a une profondeur de 2 cm, un diamètre de 1,6 cm, et deux trous traversants (4) par côté avec un diamètre de 4 mm avec l'inclinaison (α) comprise entre 45 et 135 degrés.

7. Dispositif modulaire (1) selon la revendication 2, dans lequel la fente (5) a une profondeur (a) de 5,8 cm et une largeur (b) de 2,7 cm et une inclinaison (α) comprise entre 45 et 135 degrés.
